# EUROPEAN PATENT APPLICATION

(11) **EP 4 568 156 A1**
(43) Date of publication of application: **11.06.2025**
(21) Application number: 23850315.5
(22) Date of filing: 24.07.2023
(51) Int. Cl.: H04L 5/00, H04B 7/0456, H04W 72/23, H04W 56/00

(54) **METHOD FOR TRANSMITTING PHASE TRACKING REFERENCE SIGNAL FOR SIMULTANEOUS TRANSMISSION ACROSS MULTIPLE PANNELS IN WIRELESS COMMUNICATION SYSTEM, AND APPARATUS THEREFOR**

(30) Priority: 04.08.2022 KR 20220097239; 26.09.2022 KR 20220121989; 01.02.2023 KR 20230013727; 17.02.2023 KR 20230021540
(71) Applicant: LG Electronics Inc., Yeongdeungpo-gu Seoul 07336 (KR)
(72) Inventor: KIM, Hyungtae, Seoul 06772 (KR); PARK, Haewook, Seoul 06772 (KR); KANG, Jiwon, Seoul 06772 (KR)
(74) Representative: Frenkel, Matthias Alexander
(86) International application number: PCT/KR2023/010649
(87) International publication number: WO 2024/029808

(57) **Abstract**

The present disclosure relates to a method performed by user equipment (UE) in a wireless communication system. Particularly, the method comprises the steps of: receiving, from a base station (BS), downlink control information (DCI) for simultaneous transmission across multiple panels (STxMP); and on the basis of association information between a phase tracking (PT)-reference signal (RS) port and a demodulation (DM)-RS port included in the DCI, to the BS, transmitting a first PT-RS on a first PT-RS port and transmitting a second PT-RS on a second PT-RS port, wherein first information of the association information between the PT-RS port and the DM-RS port indicates a first DM-RS port associated with the first PT-RS port, from among DM-RS ports corresponding to at least one of a first sounding reference signal resource indicator (SRI) and first precoding information, and second information of the association information between the PT-RS port and the DM-RS port indicates a second DM-RS port associated with the second PT-RS port, from among DM-RS ports corresponding to at least one of a second SRI and second precoding information.

## Description

### TECHNICAL FIELD

The disclosure relates to a wireless communication system. More particularly, the disclosure relates to a method and apparatus for transmitting a phase tracking reference signal (PT-RS) for simultaneous transmission across multiple panels (STxMP) in a wireless communication system.

### BACKGROUND

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

### DISCLOSURE

### TECHNICAL PROBLEM

Based on the above description, the disclosure relates to a method and apparatus for transmitting a phase tracking reference signal (PT-RS) for simultaneous transmission across multiple panels (STxMP) in a wireless communication system.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

According to an aspect of the disclosure, a method performed by a user equipment (UE) in a wireless communication system is provided. The method includes receiving downlink control information (DCI) for simultaneous transmission across multiple panels (STxMP) from a base station (BS), and transmitting a first phase tracking (PT)-reference signal (RS) on a first PT-RS port and a second PT-RS on a second PT-RS port to the BS, based on PT-RS port to demodulation (DM)-RS port association information included in the DCI. First information of the PT-RS port to DM-RS port association information indicates a first DM-RS port associated with the first PT-RS port among DM-RS ports corresponding to at least one of a first sounding reference signal resource indicator (SRI) or first precoding information, and second information of the PT-RS port to DM-RS port association information indicates a second DM-RS port associated with the second PT-RS port among DM-RS ports corresponding to at least one of a second SRI or second precoding information.

According to another aspect of the disclosure, a UE in a wireless communication system is provided. The UE includes at least one transceiver, at least one processor, and at least one computer memory operably connectable to the at least one processor, and storing instructions which when executed, cause the at least one processor to perform operations. The operations include receiving DCI for STxMP from a BS, and transmitting a first PT-RS on a first PT-RS port and a second PT-RS on a second PT-RS port to the BS, based on PT-RS port to DM-RS port association information included in the DCI. First information of the PT-RS port to DM-RS port association information indicates a first DM-RS port associated with the first PT-RS port among DM-RS ports corresponding to at least one of a first SRI or first precoding information, and second information of the PT-RS port to DM-RS port association information indicates a second DM-RS port associated with the second PT-RS port among DM-RS ports corresponding to at least one of a second SRI or second precoding information.

According to another aspect of the disclosure, a processing device in a wireless communication system is provided. The processing device includes at least one processor, and at least one computer memory operably connectable to the at least one processor, and storing instructions which when executed, cause the at least one processor to perform operations for a UE. The operations include receiving DCI for STxMP from a BS, and transmitting a first PT-RS on a first PT-RS port and a second PT-RS on a second PT-RS port to the BS, based on PT-RS port to DM-RS port association information included in the DCI. First information of the PT-RS port to DM-RS port association information indicates a first DM-RS port associated with the first PT-RS port among DM-RS ports corresponding to at least one of a first SRI or first precoding information, and second information of the PT-RS port to DM-RS port association information indicates a second DM-RS port associated with the second PT-RS port among DM-RS ports corresponding to at least one of a second SRI or second precoding information.

According to another aspect of the disclosure, a computer-readable storage medium is provided. The computer-readable storage medium stores at least one program code including instructions which when executed, cause at least one processor to perform operations for a UE. The operations include receiving DCI for STxMP from a BS, and transmitting a first PT-RS on a first PT-RS port and a second PT-RS on a second PT-RS port to the BS, based on PT-RS port to DM-RS port association information included in the DCI. First information of the PT-RS port to DM-RS port association information indicates a first DM-RS port associated with the first PT-RS port among DM-RS ports corresponding to at least one of a first SRI or first precoding information, and second information of the PT-RS port to DM-RS port association information indicates a second DM-RS port associated with the second PT-RS port among DM-RS ports corresponding to at least one of a second SRI or second precoding information.

According to another aspect of the disclosure, a method performed by a BS in a wireless communication system is provided. The method includes transmitting DCI for STxMP to a UE, and receiving a first PT-RS on a first PT-RS port and a second PT-RS on a second PT-RS port to the BS, based on PT-RS port to DM-RS port association information included in the DCI. First information of the PT-RS port to DM-RS port association information indicates a first DM-RS port associated with the first PT-RS port among DM-RS ports corresponding to at least one of a first SRI or first precoding information, and second information of the PT-RS port to DM-RS port association information indicates a second DM-RS port associated with the second PT-RS port among DM-RS ports corresponding to at least one of a second SRI or second precoding information.

According to another aspect of the disclosure, a BS in a wireless communication system is provided. The BS includes at least one transceiver, at least one processor, and at least one computer memory operably connectable to the at least one processor, and storing instructions which when executed, cause the at least one processor to perform operations. The operations include transmitting DCI for STxMP to a UE, and receiving a first PT-RS on a first PT-RS port and a second PT-RS on a second PT-RS port to the BS, based on PT-RS port to DM-RS port association information included in the DCI. First information of the PT-RS port to DM-RS port association information indicates a first DM-RS port associated with the first PT-RS port among DM-RS ports corresponding to at least one of a first SRI or first precoding information, and second information of the PT-RS port to DM-RS port association information indicates a second DM-RS port associated with the second PT-RS port among DM-RS ports corresponding to at least one of a second SRI or second precoding information.

Preferably, the UE may receive information indicating that a maximum number of PT-RSs is 2 from the BS.

Preferably, the first information is a first bit of the PT-RS port to DM-RS port association information, and the second information is a second bit of the PT-RS port to DM-RS port association information.

Preferably, the UE receives, from the BS, information about the DM-RS ports corresponding to the at least one of the first SRI or the first precoding information and information about the DM-RS ports corresponding to the at least one of the second SRI or the second precoding information.

Preferably, the first DM-RS port is associated with a first PUSCH transmitted on a first panel, the second DM-RS port is associated with a second PUSCH transmitted on a second panel, and the first PUSCH and the second PUSCH are transmitted to the BS in the same time and frequency resources.

The above solutions are only some of the examples of the disclosure, and various examples reflecting the technical features of the disclosure may be derived and understood from the following detailed description by those skilled in the art.

### ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

### BRIEF DESCRIPTION OF THE DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements.
FIG. 1 illustrates physical channels used in a 3^{rd} generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.
FIG. 7 is a flowchart illustrating a phase tracking-reference signal (PT-RS) for simultaneous transmission across multiple panels (STxMP) according to the disclosure.
FIG. 8 to FIG. 11 illustrate a communication system (1) and a wireless device applicable to the disclosure.

### DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

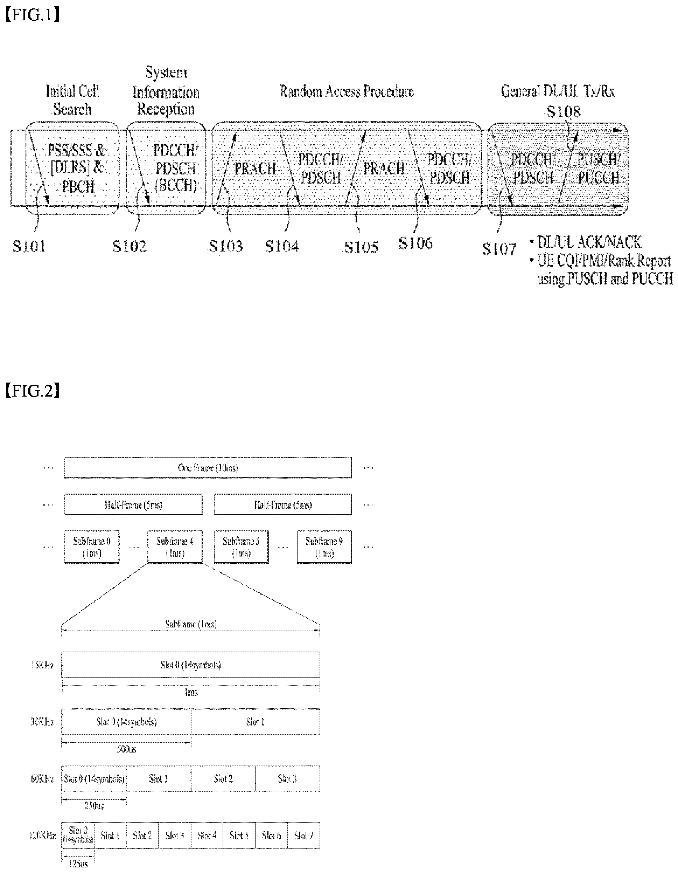

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| *u* | *N*^{slot}_{symb} | *N*^{frame,}ᵤₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot, the number of slots per frame, and the number of slots per subframe according to an SCS in the ECP case.

**[Table 2]**

| u | *N*^{slot}_{symb} | N^{frame,u}ₛₗₒₜ | _{N}subframe,uₛₗₒt |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

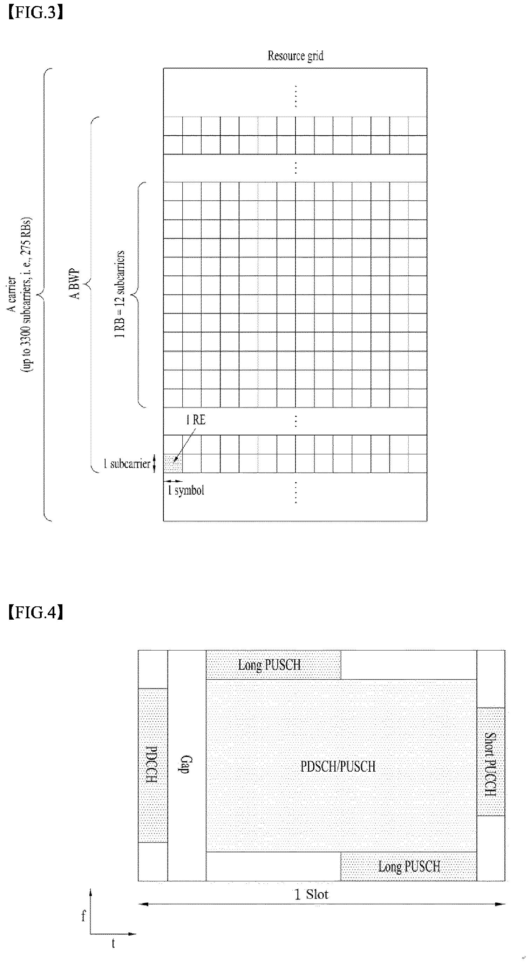

FIG. 3 illustrates an exemplary resource grid for the duration of a slot. A slot inlcudes a plurality of symbols in the time domain. For example, one slot inlcudes 14 symbols in a normal CP case, whereas one slot inlcudes 12 symbols in an extended CP case. A carrier includes a plurality of subcariers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmisison mode to a reception mode or switching from the reception mode to the transmisison mode at the BS and the UE. Some symbols at a DL-to-UL switching time point within a subcrame may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.
- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={ 1, 2, 4, 8, 16} indicates the number of PDCCH candidates (one of 0, 1, 2, 3, 4, 5, 6, and 8)
   * An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.
- SR (Scheduling Request): Information used to request UL-SCH resources
- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

**[Table 5]**

| PUCC H format | Length in OFDM symbols NPUCCHsym b | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

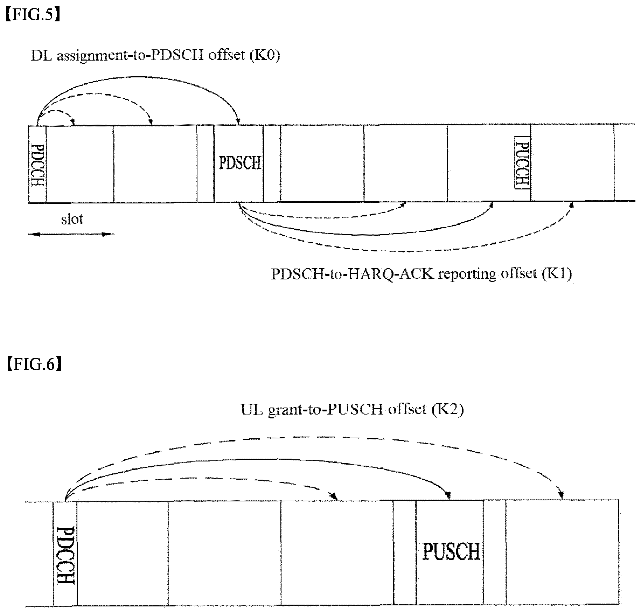

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g. PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤ n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.
- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

### M-TRP (multi-transmission and reception point) transmission in NR Release 16

In NR Release 16, an S-DCI-based M-TRP PDSCH transmission method and an M-DCI-based M-TRP PDSCH transmission method are supported.
- S-DCI-based M-TRP PDSCH in NR Release 16

One of SDM, FDM, and TDM may be used by further dividing S-DCI-based M-TRP PDSCH transmissions. In the case of SDM, one TB is transmitted in multiple layers, but layers belonging to different DM-RS CDM groups are transmitted on different Tx beams, that is, with different QCL RSs or different TCI states. This may increase the number of layers compared to an existing S-TRP transmission method, thereby improving transmission capacity. Further, when one TB is transmitted in multiple layers, some layers are transmitted to TRP 1, and the other layers are transmitted to TRP 2, which may improve channel reliability by a diversity gain.

In the case of FDM, two schemes, scheme 2a and scheme 2b, are supported. In scheme 2a, a single TB is transmitted in multiple RBs, but RBs belonging to different RB groups are transmitted on different Tx beams (i.e., QCL RSs or TCI states). In scheme 2b, the same TB is transmitted in different RB groups, but RBs belonging to different RB groups are transmitted on different Tx beams (i.e., QCL RSs or TCI states).

In the case of TDM, two schemes, scheme 3 and scheme 4 are supported. In scheme 4 which is inter-slot TDM, the same TB is transmitted repeatedly in a plurality of slots, but slots belonging to different slot groups are transmitted on different Tx beams (i.e., QCL RSs or TCI states). On the contrary, in scheme 4 which is an intra-slot TDM, the same TB is repeatedly transmitted in multiple OFDM symbol groups, but some OFDM symbol groups and the remaining OFDM symbol groups are transmitted on different Tx beams (i.e., QCL RSs or TCI states).
- M-DCI-based M-TRP PDSCH in NR Release 16

M-DCI-based M-TRP PDSCH transmission is a method in which each TRP schedules and transmits a PDSCH through DCI. That is, TRP 1 transmits PDSCH 1 through DCI 1, and TRP 2 transmits PDSCH 2 through DCI 2. When PDSCH 1 and PDSCH 2 overlap in the same time and frequency resources, the two PDSCHs are received in the same RE, which increases resource efficiency and hence transmission capacity.

For this purpose, NR Release 16 introduces a CORESET pool, which is a group of several CORESETs. TRP 1 transmits a PDCCH in a CORESET belonging to CORESET pool 0, and also transmits a PDSCH scheduled by the PDCCH. TRP 2 transmits a PDCCH in a CORESET belonging to CORESET pool 1, and also transmits a PDSCH scheduled by the PDCCH. A specific TRP may schedule a PUSCH transmission for the UE through a CORESET belonging to each CORESET pool. UCI is received on a PUCCH in some PUCCH resources scheduled by TRP 1 and the remaining PUCCH resources scheduled by TRP 2. In the case of the PUSCH or the PUCCH, channels scheduled or used by the TRPs are TDMed with each other, hence with no overlap, from which a transmission capacity increase may not be expected. However, the UE may transmit an independent PUSCH/PUCCH to each of TRP 1 and TRP 2.

### M-TRP transmission in NR Release 17

NR Release 17 supports M-TRP PDCCH repeated transmission, M-TRP PDCCH/PDSCH SFN transmission, S-DCI-based M-TRP PUSCH repeated transmission, and single PUCCH resource-based M-TRP PUCCH repeated transmission.

In all of these transmission techniques, the same content (i.e., DCI, a UL TB, or UCI) is repeatedly transmitted with URLLC target enhancement for increased reliability. Repeated transmissions are performed in TDM or FDM in the case of M-TRP PDCCH repeated transmission, repeated transmissions are performed in the same time/frequency/layer in the case of M-TRP PDCCH/PDSCH SFN transmission, repeated transmissions are performed in TDM in the case of S-DCI-based M-TRP PUSCH repeated transmission, and repeated transmissions are performed in TDM in the case of single PUCCH resource-based M-TRP PUCCH repeated transmission.
- S-DCI-based M-TRP PDCCH repeated transmission in NR Release 17

In NR Release 17, for M-TRP PDCCH repeated transmission, a plurality of CORESETs configured with different TCI states (i.e., different QCL RSs) are configured for the UE, and a plurality of SS sets connected to the CORESETs, respectively are configured. The BS indicates/configures linkage between an SS set connected to one CORESET and an SS set connected to another CORESET, for repeated transmission, to/for the UE, so that the UE may be aware that PDCCH candidates of the SS sets are repeatedly transmitted.

For example, two CORESETs, CORESET #0 and CORESET #1 may be configured for the UE and connected to SS sets #0 and #1, respectively, and SS set #0 and SS set #1 may be linked. The UE may be aware that the same DCI is repeatedly transmitted on a PDCCH candidate of SS set #0 and a PDCCH candidate of SS set #1, and through a specific rule, that the specific PDCCH candidate of SS set #0 and the specific PDCCH candidate of SS set #1 are a pair configured for repeated transmission of the same DCI. These two PDCCH candidates are referred to as linked PDCCH candidates, and when the UE successfully receives either of the two PDCCH candidates, the UE may successfully decode the DCI. However, when receiving the PDCCH candidate of SS set #0, the UE uses a QCL RS (i.e., DL beam) of the TCI state of CORESET #0 connected to SS set #0, and when receiving the PDCCH candidate of SS set #1, it uses a QCL RS (i.e., DL beam) of the TCI state of CORESET #1 connected to SS set #1, so that the UE receives the linked PDCCH candidates with different beams.
- M-TRP SFN PDCCH in NR Release 17

As a special case of M-TRP PDCCH repeated transmission, multiple TRPs may repeatedly transmit the same DCI through the same time/frequency/DM-RS port, which may be called SFN PDCCH transmission. However, for SFN PDCCH transmission, the BS configures a plurality of TCI states for one CORESET rather than a plurality of CORESETs with different TCI states. When the UE receives a PDCCH candidate in an SS set connected to the one CORESET, it performs channel estimation on a PDCCH DM-RS and attempts to decode the PDCCH DM-RS using all of the plurality of TCI states.
- M-TRP SFN PDSCH in NR Release 17

In the above M-TRP PDSCH repeated transmission, the two TRPs repeatedly transmit the corresponding channel in different resources. In a special case, however, when the two TRPs use the same resource, that is, even when the same channel is repeatedly transmitted in the same frequency, time, and layer (or DM-RS port), the reliability of the channel may be improved. In this case, the same channels that are repeatedly transmitted are combined on the air and received because their resources are not distinguished. Therefore, they are recognized as one channel from the receiver's perspective. In the NR standard, for PDSCH SFN transmission, two DL TCI states may be configured for PDSCH DM-RS reception.
- S-DCI-based M-TRP PUSCH repeated transmission in NR Release 17

For S-DCI-based M-TRP PUSCH transmission, the BS configures two SRS sets for the UE, and the SRS sets are used to indicate UL transmission ports and UL beam/QCL information for TRP #1 and TRP #2, respectively. In addition, the BS may indicate SRS resources for the respective SRS sets by two SRI fields in one DCI, and indicate up to two power control (PC) parameter sets. For example, a first SRI field may indicate SRS resources and a PC parameter set defined for set 0, and a second SRI field may indicate SRS resources and a PC parameter set defined for set 1.

The UE receives the indication of a UL Tx port, a PC parameter set, and UL beam/QCL information for TRP #1 through the first SRI field, and performs PUSCH transmission in a TO corresponding to SRS set #0. Similarly, the UE receives the indication of a UL Tx port, a PC parameter set, and UL beam/QCL information for TRP #2 through the second SRI field, and performs PUSCH transmission in a TO corresponding to SRS set #1.
- M-TRP PUCCH repeated transmission based on single PUCCH resource in NR Release 17

For M-TRP PUCCH transmission based on a single PUCCH resource, the BS activates/configures two spatial relation infos for the single PUCCH resource, for the UE, and when the UE transmits UCI in the PUCCH resource, the spatial relation infos are used to indicate spatial relation information for TRP #1 and TRP #2, respectively.

For example, the UE receives an indication of a Tx beam/PC parameter for TRP #1 through a value indicated by a first spatial relation info, and performs PUCCH transmission in a TO corresponding to TRP #1 using this information. Similarly, the UE receives an indication of a Tx beam/PC parameter for TRP #2 through a value indicated by a second spatial relation info, and performs PUCCH transmission in a TO corresponding to TRP #2 using this information.

In the Rel 17 standardization meeting, a configuration method was enhanced so that two spatial relation infos may be configured for a PUCCH resource, for M-TRP PUCCH repeated transmission. That is, when a PC parameter is set in each spatial relation info, a spatial relation RS may be configured. As a result, PC information and spatial relation RS information corresponding to two TRPs may be configured through the two spatial relation infos, and the UE transmits UCI in TO 1 through a PUCCH using the first spatial relation info, and transmits the same UCI (i.e., CSI, ACKNAK, SR) in TO 2 through the PUCCH using the second spatial relation info.

Hereinafter, a PUCCH resource configured with two spatial relation infos is referred to as an M-TRP PUCCH resource, and a PUCCH resource configured with one spatial relation info is referred to as an S-TRP PUCCH resource.

### Meaning of TCI state/beam indication

Using or mapping a specific TCI state (or TCI) when data/DCI/UCI is received in a certain frequency/time/spatial resource may mean that in DL, a channel is estimated from a DM-RS in the frequency/time/spatial resource, using a QCL type and QCL RS indicated by the DL TCI state, and data/DCI is received/demodulated based on the estimated channel.

In UL, it may mean that a DM-RS and data/UCI are transmitted/modulated in the frequency/time/spatial resource using a Tx beam and/or Tx power indicated by the UL TCI state.

A UL TCI state includes information about a Tx beam or Tx power for the UE, and the information may be configured for the UE by other parameters such as a spatial relation info, instead of the TCI state.

The UL TCI state may be directly indicated by DCI carrying a UL grant, or may mean a spatial relation info for an SRS resource indicated by an SRI field in the UL grant DCI. Alternatively, it may mean an open-loop Tx power control parameter linked to the value indicated by the SRI field in the UL grant DCI. Alternatively, a UL TCI may be indicated by the DL grant DCI.

Although the disclosure applies the proposed methods on the assumption of cooperative transmission/reception between two TRPs, for convenience of description, they may be extended to a multi-TRP environment with three or more TRPs, and also to a multi-panel environment. Different TRPs may be recognized as different TCI states to the UE, and transmitting/receiving data/DCI/UCI using TCI state 1 by the UE means transmitting/receiving data/DCI/UCI to/from TRP 1 by the UE.

In the disclosure, a TO means each channel transmitted at a different time, when multiple channels are TDMed, each channel transmitted in a different frequency/RB when the channels are FDMed, and each channel transmitted through a different layer/beam/DM-RS port when the channels are SDMed. One TCI state is mapped to each TO. When the same channel is repeatedly transmitted, complete DCI/data/UCI is transmitted in one TO, and the receiving end receives multiple TOs to increase a reception success rate.

### STxMP (simultaneous transmission across multi-panel)

In NR Release 18, a method of simultaneously transmitting multiple channels/RSs of the same type or multiple channels/RSs of different types by a UE is under discussion. For a legacy UE, the operation of transmitting multiple channels/RSs at one time is limited. For example, although it is possible to simultaneously transmit a plurality of SRS resources of different SRS sets for UL beam measurement, it is impossible to simultaneously transmit a plurality of PUSCHs.

However, this constraint is relaxed for an advanced UE discussed in NR Release 18, and the advanced UE may simultaneously transmit multiple channels or RSs using multiple Tx panels. This UE is referred to as a STxMP UE. For example, two PUSCHs corresponding to two UL TBs are scheduled in the same RE, and spatial relation RS 1 and PC parameter set 1 (i.e., UL TCI state 1) and spatial relation RS 2 and PC parameter set 2 (i.e., UL TCI state 2) are configured for transmissions of PUSCH 1 and PUSCH 2, respectively. The UE simultaneously transmits PUSCH 1 using panel 1 corresponding to UL TCI state 1, and PUSCH 2 using panel 2 corresponding to UL TCI state 2.

When the BS schedules PUSCHs by DCI, it may indicate whether the PUSCHs are transmitted through STxMP, a single panel, or M-TRP PUSCH repeated transmission. Obviously, the UE should have STxMP capabilities, and an STxMP mode should be available in advance through RRC signaling. To this end, an existing SRS resource set indicator field may be redefined and used, or a new DCI field may be introduced.

### Relationship between PT-RS and DM-RS in STxMP PUSCH transmission

A method of associating a PT-RS with a DM-RS on a panel-by-panel basis in SDM STxMP PUSCH transmission is proposed below.

In the case of SDM STxMP described above, a rank with which each panel (i.e., a Tx panel of the UE) should be transmitted is indicated by DCI (e.g., RI1 for panel 1 and RI2 for panel 2 are indicated), and the rank of a PUSCH is determined as the sum (RI1+RI2) of the ranks of the two panels. For example, when RI1 is indicated for panel 1, and RI2 is indicated for panel 2 for the UE, the rank of the PUSCH is determined as the sum RI1+RI2 of the ranks of the two panels.

Further, (RI1+RI2) DM-RS ports indicated by a DM-RS port indicator field in the DCI. To indicate SDM STxMP PUSCH transmission, a 2-bit SRS resource set indicator is set to 10 or 11, and the SDM STxMP PUSCH may be enabled by a separate indicator or a specific condition.

When the maximum number of PT-RSs is set to 2 by RRC signaling, two PT-RSs are transmitted in the two panels, respectively in SDM STxMP PUSCH transmission. That is, the BS associates a PT-RS with a DM-RS port by indicating one of DM-RS ports transmitted in panel 1, and associates a PT-RS with a DM-RS port by indicating one of DM-RS ports transmitted in panel 2. In the disclosure, a method of associating a PT-RS with a DM-RS on a panel-by-panel basis is proposed.

This per-panel DM-RS to PT-RS port association method has been supported previously. Specifically, the indicated DM-RS ports are divided into two groups, and one PT-RS and one DM-RS port are associated in each group. Each group may refer to DM-RS ports transmitted by each panel. However, the conventional method is effective only when one PUSCH TO is scheduled through a single codebook-based (CB) SRS resource set/a single non-codebook-based (NCB) SRS resource set/a single TPMI field/a single SRI field. In the case of the M-TRP PUSCH transmission method, although two SRS resource sets/two fields are used for PUSCH scheduling, they are used for scheduling different PUSCH TOs. Therefore, each PUSCH TO is eventually scheduled through a single CB SRS resource set/a single NCB SRS resource set/a single TPMI field/a single SRI field in the M-TRP PUSCH transmission method as well.

When for SDM STxMP, a single PUSCH TO is scheduled through multiple CB SRS resource sets/multiple NCB SRS resource sets/multiple TPMI fields/multiple SRI fields, the existing DM-RS to PT-RS port association method is not valid. For example, it is assumed that for a CB PUSCH, SRS resource 1 and SRS resource 2 are configured as two 2-port SRS resources from two SRS resource sets by two SRI fields, and it is configured using two TPMI fields that RI1 = 1 and precoder1 = [1 1]^{T} for panel 1, and RI2 = 1 and precoder2 = [1 -1]^{T} for panel 2. In this case, a DM-RS port corresponding to precoder 1 and a DM-RS port corresponding to precoder 2 may not be grouped according to the existing method. In the existing grouping method, layers transmitted using PUSCH antenna ports 1000 and 1002 are determined as one group, and layers transmitted using PUSCH antenna ports 1001 and 1003 are determined as another group. However, the layers corresponding to precoder 1 and precoder 2 may not be grouped in this manner. For grouping using the existing method, an additional assumption is required that each element of 2-port SRS resource 1 or precoder 1 is mapped to the PUSCH antenna ports 1000 and 1002, and each element of 2-port SRS resource 2 (or precoder 2) is mapped to the PUSCH antenna ports 1001 and 1003.

In another example, it is assumed that for a CB PUSCH, SRS resource 1 to SRS resource 4 are configured as four 2-port SRS resources from four SRS resource sets by four SRI fields, and it is configured using four TPMI fields that RI1=1 and precoder 1=[1 1]^{T} for panel 1, RI2=1 and precoder 2=[1 -1]^{T} for panel 2, RI3=1 and precoder 3=[1 j]^{T} for panel 3, and RI4=1 and precoder 4=[1 -1]^{T} for panel 4. In this case, to group DM-RS ports corresponding to precoder 1 to precoder 4, an additional assumption is required that 2-port SRS resource 1 (or each element of precoder 1) is mapped to PUSCH antenna ports 1000 and 1004, 2-port SRS resource 2 (or each element of precoder 2) is mapped to PUSCH antenna ports 1001 and 1005, 2-port SRS resource 3 (or each element of precoder 3) is mapped to PUSCH antenna ports 1002 and 1006, and 2-port SRS resource 4 (or each element of precoder 4) is mapped to PUSCH antenna ports 1003 and 1007. Further, layers transmitted using the PUSCH antenna ports 1000 and 1004 should be determined as one group, layers transmitted using the PUSCH antenna ports 1001 and 1005 should be determined as another group, layers transmitted using the PUSCH antenna ports 1002 and 1006 should be determined as one group, and layers transmitted using the PUSCH antenna ports 1003 and 1007 should be determined as another group.

After the layers/DM-RS ports are grouped on a panel-by-panel basis in this manner, a PT-RS field size should be increased to associate the four PT-RS ports with DM-RSs on a panel-by-panel basis. For example, a 4-bit PT-RS to DM-RS association field is used so that a first field of the field is used for PT-RS to DM-RS association of panel 1, a second field is used for PT-RS to DM-RS association of panel 2, a third field is used for PT-RS to DM-RS association of panel 3, and a fourth field is used for PT-RS to DM-RS association of panel 4. Alternatively, when only two PT-RS ports are still supported, one DM-RS port may be selected from group 1 and group 2 using a 2-bit indicator and associated with PT-RS port 0, and one DM-RS port may be selected from group 3 and group 4 using another 2-bit indicator and associated with PT-RS port 1. Alternatively, when only 2 PT-RS ports are still supported, one DM-RS port may be selected from a specific group (e.g., group 1) using a 1-bit indicator and associated with PT-RS port 0, and one DM-RS port may be selected from another group (e.g., group 2) using another 1-bit indicator and associated with PT-RS port 1.

In another example, it is assumed that for a CB PUSCH, SRS resource 1 and SRS resource 2 are configured as two 4-port SRS resources from two SRS resource sets by two SRI fields, and it is configured using two TMPI fields that RI1=1 and precoderl=[1 1 1 1]^{T} for panel 1, and RI2=1 and precoder2=[1 1 -1 -1]^{T} for panel 2. In this case, a DM-RS port corresponding to precoder 1 and a DM-RS port corresponding to precoder 2 may not be grouped by the existing method. In the existing grouping method, layers transmitted using PUSCH antenna ports 1000 and 1002 are determined as one group, and layers transmitted using PUSCH antenna ports 1001 and 1003 are determined as another group. However, layers corresponding to precoder 1 and precoder 2 may not be grouped in this manner. For grouping by extending the existing method, an additional assumption is required that 4-port SRS resource 1 (or each element of precoder 1) is mapped to PUSCH antenna ports 1000, 1002, 1004, and 1006, and 4-port SRS resource 2 (or each element of precoder 2) is mapped to PUSCH antenna ports 1001, 1003, 1005, and 1007. In addition, layers transmitted using the PUSCH antenna ports 1000, 1002, 1004, and 1006 should be determined as one group, and layers transmitted using the PUSCH antenna ports 1001, 1003, 1005, and 1007 should be determined as another group.

In another example, SRS resources may be selected from SRS resource set 0 and SRS resource set 1, respectively, through two SRI fields in an NCB PUSCH. DM-RS ports corresponding to the SRS resources selected from SRS resource set 0 (i.e., DM-RS ports generated by applying the same precoding as precoding already applied to each SRS resource) may be assumed as DM-RS ports of panel 1, and DM-RS ports corresponding to the SRS resources selected from SRS resource set 1 may be assumed as DM-RS ports of panel 2. When n1 SRS resources are selected from SRS resource set 0, DM-RS ports corresponding to these SRS resources may be DM-RS ports with n1 lower indexes among DM-RS ports (e.g., n1+n2 DM-RS ports) indicated by a DM-RS port indicator, and when n2 SRS resources are selected from SRS resource set 1, DM-RS ports corresponding to these SRS resources may be the remaining n2 DM-RS ports among the DM-RS ports indicated by the DM-RS port indicator.

As other methods for grouping layers/DM-RS ports on a panel-by-panel basis, the following may be considered.

The number of DM-RS port indicator fields may be increased from one to two, so that each field may indicate a DM-RS port used by each panel.

Alternatively, one field may be used, and indicated DM-RS ports may be distinguished as a DM-RS port of panel 1 and a DM-RS port of panel 2 using a specific rule. For example, DM-RS ports belonging to a first CDM group among the indicated DM-RS ports are defined as DM-RS ports corresponding to panel 1, and DM-RS ports belonging to a second CDM group are defined as DM-RS ports corresponding to panel 2.

Alternatively, for example, RI1 DM-RS ports which are first indicated (or having lower indexes) among the indicated DM-RS ports are defined as DM-RS ports corresponding to panel 1, and the remaining DM-RS ports are defined as DM-RS ports corresponding to panel 2.

After the layers/DM-RS ports are grouped on a panel-by-panel basis, two PT-RSs may be associated with DM-RS ports, respectively, using a 2-bit PT-RS to DM-RS association field according to the following proposed method.
1) When RI1=1 and RI2=1, each panel transmits only one layer. Accordingly, PT-RS ports 0 and 1 are associated with DM-RS ports transmitted by panels 1 and 2, respectively.
2) When RI1=1 and RI2=2, PT-RS port 0 is associated with one DM-RS port transmitted by panel 1. PT-RS port 1 is associated with one of two DM-RS ports transmitted by panel 2, and indicated by a PT-RS to DM-RS association field in DCI (using only one MSB or one LSB out of the 2-bit size field).
3) When RI1=2 and RI2=1, PT-RS port 1 is associated with one DM-RS port transmitted by panel 2. PT-RS port 0 is associated with one of two DM-RS ports transmitted by panel 1 and indicated by a PT-RS to DM-RS association field in DCI (using only one MSB or one LSB of the 2-bit size field).
4) When RI1=2 and RI2=2, PT-RS port 0 is associated with one of two DM-RS ports transmitted by panel 1 and indicated by a PT-RS to DM-RS association field in DCI (using only one MSB or one LSB of the 2-bit size field). PT-RS port 1 is associated with one of two DM-RS ports transmitted by panel 2 and indicated by the PT-RS to DM-RS association field in the DCI (using only one MSB or one LSB of the 2-bit size field).
5) When RI1=1 and RI2=3, PT-RS port 0 is associated with one DM-RS port transmitted by panel 1. PT-RS port 1 is associated with one of three DM-RS ports transmitted by panel 2, and indicated by a PT-RS to DM-RS association field (using both 2 bits) in DCI.
6) When RI1=3 and RI2=1, PT-RS port 1 is associated with one DM-RS port transmitted by panel 2. PT-RS port 0 is associated with one of three DM-RS ports transmitted by panel 1, and indicated by a PT-RS to DM-RS association field (using both 2 bits) in DCI.

In the above proposal, the 2-bit PT-RS to DM-RS association field is interpreted differently depending on a combination of (RI1, RI2). That is, in the case of (1,2), (2,1), and (2,2), one bit is used for each PT-RS DM-RS association indication, whereas in the case of (1,3) and (3,1), the two bits are used for a PT-RS indication for a panel transmitting three layers.

Even when the maximum number of PT-RSs is set to 2, when PUSCH transmission is performed using a single panel, the number of PT-RSs is set to 1. For example, when the SRS resource set indicator is set to 00 or 01, a single panel transmission may fall back to STxMP transmission. In this case, the number of PT-RSs is set to 1, and one of indicated DM-RS ports and a PT-RS are associated by the PT-RS to DM-RS association field.

For compatibility with conventional M-TRP PUSCH repeated transmission, more specifically, with M-TRP PUSCH repeated transmission of 3GPP NR Release 17, when the repetition number is 1, the disclosure may be applied, and when the repetition number is 2 or more, PT-RS to DM-RS association may be indicated in the manner of 3GPP NR Release 17.

Alternatively, to apply both STxMP in which PUSCH transmission is performed in one TO using two panels, and TDM repeated transmission in which the same TB is transmitted across multiple TOs, a new indicator may be defined. When the indicator is 1, two SRS resource sets may be mapped to a single TO, and this is repeatedly applied to multiple TOs to perform repeated PUSCH transmission, whereas when the indicator is 0, only one SRS resource set may be mapped to one TO (i.e., the M-TRP PUSCH transmission method of 3GPP NR Release 17 may be applied). Further, four SRIs/TPMIs may be indicated for a target of four TRPs, and two pairs may be indicated by pairing the SRI/TPMIs and applied alternately to each TO.

The rank of a PUSCH may be used to dynamically indicate one of SDM STxMP and the remaining STxMP techniques (i.e., SFN STxMP and FDM STxMP) to the UE, or to dynamically indicate one of SDM STxMP and the existing M-TRP repeat transmission to the UE. Since SDM STxMP requires a PUSCH rank of 2 or higher, SDM STxMP and the remaining STxMP techniques may be distinguished from each other, depending on whether the rank is 2 or higher. To this end, the remaining STxMP techniques are restricted to transmission with rank 1 only.

When dynamic switching between SDM STxMP and SFN STxMP is possible by a MAC CE or DCI, the following method may be considered.

When the maximum number of PT-RSs is set to 2 (or 2 or more) by RRC signaling, SDM STxMP uses 2 (or 2 or more) PT-RS ports, whereas SFN STxMP uses only 1 PT-RS port (i.e., PT-RS port 0). That is, it is proposed that the number of PT-RS ports actually used is determined according to a STxMP technique. In SFN STxMP, multiple panels transmit the same DM-RS port. Therefore, regardless of a DM-RS port associated with a PT-RS port, the PT-RS port is associated with both panels. Therefore, a PT-RS port may not be configured separately for each panel, and as a result, one PT-RS port is sufficient.

Further, even if the maximum number of PT-RSs is set to 2 for a UE for which the SDM STxMP transmission mode is enabled by RRC signaling, when PUSCH transmission is performed using a single panel or a single SRS resource set, the number of PT-RSs is set to 1.

For example, when the SRS resource set indicator is 00 or 01, and a codebook subset restriction (CSR) of a codebook corresponding to an SRS resource set selected by the SRS resource set indicator is fullyAndPartialAndNonCoherent, the UE ignores the maximum number of PT-RSs set to 2, and interprets the PT-RS to DM-RS association field of UL scheduling DCI, assuming that the maximum number of PT-RSs is 1 (i.e., assuming that the number of PT-RS ports is 1). In other words, the UE ignores that the maximum number of PT-RSs is set to 2, and interprets the PT-RS to DM-RS association field using Tables 6 to 8 below. This is because in the case of a codebook with a CSR being fullyAndPartialAndNonCoherent, all PUSCH antenna ports are co-coherent, allowing phase tracking with a single PT-RS.

A codebook corresponding to an SRS resource set may mean a codebook used by a TPMI field (e.g., a first TPMI field) connected to SRS resource set 0 and a TPMI field (e.g., a second TPMI field) connected to SRS resource set 1.

In another example, when the SRS resource set indicator is 00 or 01, and the UE reports that it supports full coherency by its UE capability, the UE ignores the maximum number of PT-RSs set to 2, and interprets the PT-RS to DM-RS association field of UL scheduling DCI, assuming the maximum number of PT-RSs to be 1 (i.e., assumes the number of PT-RS ports to be 1). In other words, the UE ignores the maximum number of PT-RSs set to 2 and interprets the PT-RS to DM-RS association field using Tables 6 to 8. This is because the SRS resources of an SRS resource set indicated by the SRS resource set indicator are coherent, allowing phase tracking with a single PT-RS.

**[Table 6]**

| Value | DM-RS port |
|---|---|
| 0 | 1st scheduled DM-RS port |
| 1 | 2nd scheduled DM-RS port |
| 2 | 3rd scheduled DM-RS port |
| 3 | 4th scheduled DM-RS port |

**[Table 7]**

| Value of MSB | DM-RS port | Value of LSB | DM-RS port |
|---|---|---|---|
| 0 | 1st scheduled DM-RS port corresponding to SRS resource indicator field and/or Precoding information and number of layers field | 0 | 1st scheduled DM-RS port corresponding to Second SRS resource indicator field and/or Second Precoding information field |
| 1 | 2nd scheduled DM-RS port corresponding to SRS resource indicator field and/or Precoding information and number of layers field | 1 | 2nd scheduled DM-RS port corresponding to Second SRS resource indicator field and/or Second Precoding information field |

**[Table 8]**

| Value of MSB | DM-RS port | Value of LSB | DM-RS port |
|---|---|---|---|
| 0 | 1st DM-RS port which shares PT-RS port 0 | 0 | 1st DM-RS port which shares PT-RS port 1 |
| 1 | 2nd DM-RS port which shares PT-RS port 0 | 1 | 2nd DM-RS port which shares PT-RS port 1 |

In the above proposal, the UE ignores the maximum number of PT-RSs set to 2, and interprets the PT-RS to DM-RS association field of the UL scheduling DCI, assuming that the maximum number of PT-RSs is 1 or that the number of PT-RS ports is 1. That is, the UE ignores the maximum number of PT-RSs set to 2, and interprets the PT-RS to DM-RS association field using Table 7.3.1.1.2-25. In the same sense, the UE assumes that all indicated PUSCH DM-RS ports share PT-RS port 0.

Alternatively, when SDM STxMP transmission is indicated to a UE for which the SDM STxMP transmission mode is enabled by RRC signaling (e.g., when the SRS resource set indicator field configured in UL DCI is 10 or 11, and the PUSCH repetition number is set to 1 or 0, or when the SRS resource set indicator field configured in the UL DCI is 10 or 11), the UE ignores a maximum number of PT-RSs configured by RRC signaling, and interprets the PT-RS to DM-RS association field of UL scheduling DCI, assuming the maximum number of PT-RSs to be 2 or the number of PT-RSs to be 2. Specifically, the UE performs the following operations for an NCB PUSCH and a CB PUSCH, respectively.

When transmitting the NCB PUSCH, the UE assumes the number of PT-RSs to be 2, assumes that the SRS resources of SRS resource set 0 indicated by the first SRI field and DM-RS ports corresponding to the SRS resources share PT-RS port 0, and assumes that the SRS resources of SRS resource set 0 indicated by the second SRI field and DM-RS ports corresponding to the SRS resources share PT-RS port 1.

When transmitting the CB PUSCH, the UE assumes the number of PT-RSs to be 2, assumes that the SRS resources of SRS resource set 0 indicated by the first SRI field and DM-RS ports generated by applying a PMI indicated by the first TPMI field to antenna ports of the SRS resources share PT-RS port 0, and assume that the SRS resources of SRS resource set 1 indicated by the second SRI field and DM-RS ports generated by applying a PMI indicated by the second TPMI field to antenna ports of the SRS resources share PT-RS port 1.

On the other hand, when S-TRP transmission is indicated to a UE for which the SDM STxMP transmission mode is enabled by RRC signaling (e.g., when the SRS resource set indicator field set in UL DCI is set to 00 or 01), the UE defines PT-RS to DM-RS association according to a maximum number of PT-RSs set by RRC in the conventional manner.

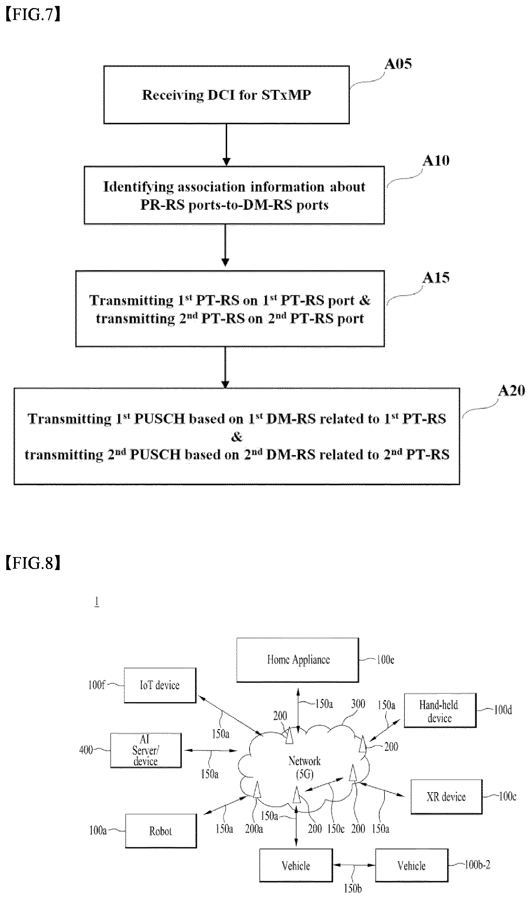

FIG. 7 is a flowchart for transmitting a PT-RS for STxMP according to the disclosure. In FIG. 7, it is assumed that a UE receives information about a maximum number of PT-RSs being 2 from a BS, and then performs STxMP.

Referring to FIG. 7, the UE receives DCI for STxMP from the BS in step A05. In particular, a 2-bit SRS resource set indicator included in the DCI is set to 10 or 11 to indicate SDM STxMP PUSCH transmission, and an SDM STxMP PUSCH may be enabled by a separate indicator or a specific condition.

In step A10, the UE identifies PT-RS port to DM-RS port association information included in the DCI. In particular, the UE identifies that first information of the PT-RS port to DM-RS port association information indicates a first DM-RS port associated with a first PT-RS port among DM-RS ports corresponding to at least one of a first SRI or first precoding information, and second information of the PT-RS port to DM-RS port association information indicates a second DM-RS port associated with a second PT-RS port among DM-RS ports corresponding to at least one of a second SRI or second precoding information.

Preferably, the first information is a first bit of the PT-RS port to DM-RS port association information, and the second information is a second bit of the PT-RS port to DM-RS port association information.

Further, for step A10, the UE preliminarily receives by RRC signaling from the BS, information about the DM-RS ports corresponding to the at least one of the first SRI or the first precoding information and information about the DM-RS ports corresponding to the at least one of the second SRI or the second precoding information.

Subsequently, the UE transmits a first PT-RS on a first PT-RS port and a second PT-RS on a second PT-RS port to the BS in step A15.

Finally, in step A20, the UE transmits a first PUSCH based on a first DM-RS associated with the first PT-RS and a second PUSCH based on a second DM-RS associated with the second PT-RS to the BS. Particularly, the first DM-RS port is associated with a first PUSCH transmitted on a first panel, the second DM-RS port is associated with a second PUSCH transmitted on a second panel, and the first PUSCH and the second PUSCH are transmitted to the BS in the same time and frequency resources.

In the disclosure, the number of PT-RSs refers to the number of PT-RS ports.

In the disclosure, for the PUSCH, a plurality of panels may correspond to a plurality of SRS resource sets configured for CB/NCB purposes or correspond to SRS resources indicated by a plurality of SRI fields. For example, panel 1 and panel 2 may correspond to SRS resource set 0 and SRS resource set 1, respectively. Alternatively, panel 1 and panel 2 may correspond to SRS resources indicated by a first SRI field and SRS resources indicated by a second SRI field, or the plurality of panels may correspond to PMIs indicated by a plurality of TPMI fields. For example, panel 1 may correspond to a PMI indicated by a first TPMI field, and panel 2 may correspond to a PMI indicated by a second TPMI field. In addition, for the PUCCH, they may correspond to a plurality of spatial relation infos configured for PUCCH resources. For example, panel 1 may correspond to spatial relation info 0, and panel 2 may correspond to spatial relation info 1. Alternatively, a panel ID may be introduced in the standard to directly indicate a panel. Alternatively, a plurality of panels may correspond to a plurality of UL TCI states indicated using a unified TCI framework.

Alternatively, a panel may be defined as a group of antenna ports having coherency. For example, in the existing standard, when a 4 Tx codebook is configured, PUSCH antenna ports 1000 and 1002 may be defined as panel 1, and PUSCH antenna ports 1001 and 1003) may be defined as panel 2. Similarly, when an 8 Tx codebook is introduced later, PUSCH antenna ports 1000, 1002, 1004, and 1006 may be defined as panel 1, and PUSCH antenna ports 1001, 1003, 1005, and 1007 may be defined as panel 2. For the NCB PUSCH, a PT-RS port index may be configured for each SRS resource, and SRS resources with the same PT-RS port index may be assumed to be transmitted in the same panel.

Although for convenience of description, the above proposal assumes two STxMP panels, two UL TCI states, and two spatial relation infos/RSs and PC sets configured for UL M-TRP transmission, this may be extended to N1, N2, and N3 STxMP panels, UL TCI states, spatial relation infos/RSs, and PC sets.

The above proposals may be finally applied in combination.

Although the proposals have been described in the context of the PUSCH, they may be extended to other channels such as the PUCCH/PDSCH/PDCCH.

Whether or not the above proposals are applied, and the factors used in the proposals may be indicated to the UE by DCI/MAC-CE/RRC signaling from the BS, or the UE may report them to the BS.

FIG. 8 illustrates an exemplary communication system to which the embodiment is applied.

Referring to FIG. 8, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

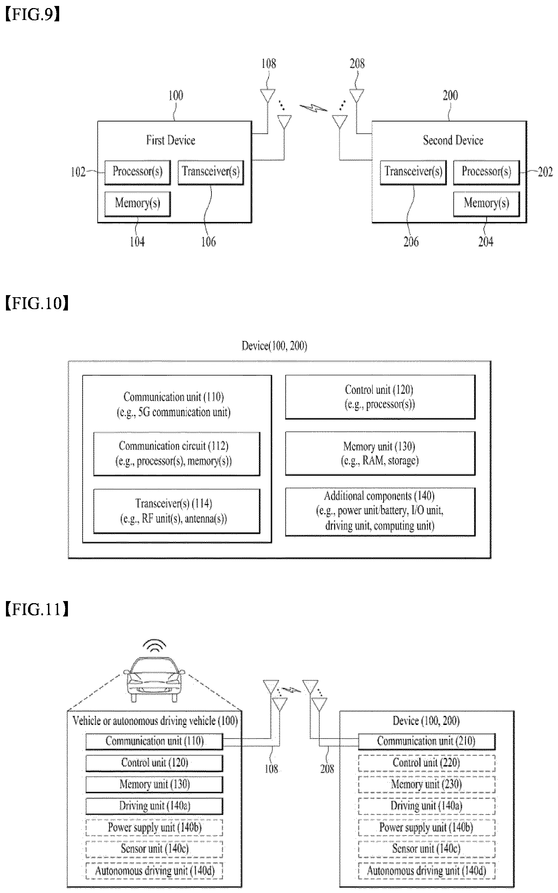

FIG. 9 illustrates exemplary wireless devices to which the embodiment is applicable.

Referring to FIG. 9, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 10 illustrates other exemplary wireless devices to which the embodiment is applied. The wireless devices may be implemented in various forms according to a use case/service (see FIG. 8).

Referring to FIG. 10, wireless devices 100 and 200 may correspond to the wireless devices 100 and 200 of FIG. 9 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcast terminal, a hologram device, a public safety device, an MTC device, a medicine device, a fintech device (or a finance device), a security device, a climate/environment device, the AI server/device (400 of FIG. 8), the BSs (200 of FIG. 8), a network node, etc. The wireless device may be used in a mobile or fixed place according to a use-example/service.

In FIG. 10, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 11 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 10 illustrates other exemplary wireless devices to which the embodiment is applied. The wireless devices may be implemented in various forms according to a use case/service (see FIG. 8).

Referring to FIG. 10, wireless devices 100 and 200 may correspond to the wireless devices 100 and 200 of FIG. 9 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 8), the vehicles (100b-1 and 100b-2 of FIG. 8), the XR device (100c of FIG. 13), the hand-held device (100d of FIG. 8), the home appliance (100e of FIG. 8), the IoT device (100f of FIG. 8), a digital broadcast terminal, a hologram device, a public safety device, an MTC device, a medicine device, a fintech device (or a finance device), a security device, a climate/environment device, the AI server/device (400 of FIG. 8), the BSs (200 of FIG. 8), a network node, etc. The wireless device may be used in a mobile or fixed place according to a use-example/service.

In FIG. 10, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 11 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

### INDUSTRIAL APPLICABILITY

The disclosure is applicable to UEs, BSs, or other apparatuses in a wireless mobile communication system.

## Claims

1. A method performed by a user equipment (UE) in a wireless communication system, the method comprising:
receiving downlink control information (DCI) for simultaneous transmission across multiple panels (STxMP) from a base station (BS); and
transmitting a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.

2. The method of claim 1, further comprising receiving information indicating that a maximum number of PT-RSs is 2 from the BS.

3. The method of claim 1, wherein the first information is a first bit of the PT-RS port to DM-RS port association information, and
wherein the second information is a second bit of the PT-RS port to DM-RS port association information.

4. The method of claim 1, further comprising receiving, from the BS, information about the DM-RS ports corresponding to the at least one of the first SRI or the first precoding information and information about the DM-RS ports corresponding to the at least one of the second SRI or the second precoding information.

5. The method of claim 1, wherein the first DM-RS port is associated with a first PUSCH transmitted on a first panel,
wherein the second DM-RS port is associated with a second PUSCH transmitted on a second panel, and
wherein the first PUSCH and the second PUSCH are transmitted to the BS in the same time and frequency resources.

6. A user equipment (UE) in a wireless communication system, comprising:
at least one transceiver;
at least one processor; and
at least one computer memory operably connectable to the at least one processor, and storing instructions which when executed, cause the at least one processor to perform operations,
wherein the operations include:
receiving downlink control information (DCI) for simultaneous transmission across multiple panels (STxMP) from a base station (BS); and
transmitting a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.

7. The UE of claim 6, wherein the operations further include receiving information indicating that a maximum number of PT-RSs is 2 from the BS.

8. The UE of claim 6, wherein the first information is a first bit of the PT-RS port to DM-RS port association information, and
wherein the second information is a second bit of the PT-RS port to DM-RS port association information.

9. The UE of claim 9, wherein the operations further include receiving, from the BS, information about the DM-RS ports corresponding to the at least one of the first SRI or the first precoding information and information about the DM-RS ports corresponding to the at least one of the second SRI or the second precoding information.

10. The UE of claim 6, wherein the first DM-RS port is associated with a first PUSCH transmitted on a first panel,
wherein the second DM-RS port is associated with a second PUSCH transmitted on a second panel, and
wherein the first PUSCH and the second PUSCH are transmitted to the BS in the same time and frequency resources.

11. A processing device in a wireless communication system, comprising:
at least one processor; and
at least one computer memory operably connectable to the at least one processor, and storing instructions which when executed, cause the at least one processor to perform operations for a user equipment (UE),
wherein the operations include:
receiving downlink control information (DCI) for simultaneous transmission across multiple panels (STxMP) from a base station (BS); and
transmitting a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.

12. A computer-readable storage medium storing at least one program code including instructions which when executed, cause at least one processor to perform operations for a user equipment (UE),
wherein the operations include:
receiving downlink control information (DCI) for simultaneous transmission across multiple panels (STxMP) from a base station (BS); and
transmitting a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.

13. A method performed by a base station (BS) in a wireless communication system, the method comprising:
transmitting downlink control information (DCI) for simultaneous transmission across multiple panels (STxMP) to a user equipment (UE); and
receiving a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.

14. The method of claim 13, further comprising transmitting information indicating that a maximum number of PT-RSs is 2 to the UE.

15. The method of claim 13, wherein the first information is a first bit of the PT-RS port to DM-RS port association information, and
wherein the second information is a second bit of the PT-RS port to DM-RS port association information.

16. The method of claim 13, further comprising transmitting, to the UE, information about the DM-RS ports corresponding to the at least one of the first SRI or the first precoding information and information about the DM-RS ports corresponding to the at least one of the second SRI or the second precoding information.

17. The method of claim 13, wherein the first DM-RS port is associated with a first PUSCH transmitted on a first panel,
wherein the second DM-RS port is associated with a second PUSCH transmitted on a second panel, and
wherein the first PUSCH and the second PUSCH are received from the UE in the same time and frequency resources.

18. A base station (BS) in a wireless communication system, comprising:
at least one transceiver;
at least one processor; and
at least one computer memory operably connectable to the at least one processor, and storing instructions which when executed, cause the at least one processor to perform operations,
wherein the operations include:
transmitting downlink control information (DCI) for simultaneous transmission across multiple panels (STxMP) to a user equipment (UE); and
receiving a first phase tracking (PT)-reference signal (RS) on a first PT-RS port and a second PT-RS on a second PT-RS port to the BS, based on PT-RS port to demodulation (DM)-RS port association information included in the DCI,
wherein first information of the PT-RS port to DM-RS port association information indicates a first DM-RS port associated with the first PT-RS port among DM-RS ports corresponding to at least one of a first sounding reference signal resource indicator (SRI) or first precoding information, and
wherein second information of the PT-RS port to DM-RS port association information indicates a second DM-RS port associated with the second PT-RS port among DM-RS ports corresponding to at least one of a second SRI or second precoding information.
